# EUROPÄISCHE PATENTANMELDUNG

(11) **EP 1 184 784 A2**
(43) Veröffentlichungstag der Anmeldung: **06.03.2002**
(21) Anmeldenummer: 01121003.6
(22) Anmeldetag: 31.08.2001
(51) Int. Cl.: G06F 9/38

(54) **Programmgesteuerte Einheit zur gleichzeitigen Befehlsausführung**

(30) Priorität: 01.09.2000 DE 10043003
(71) Anmelder: Infineon Technologies AG, 81669 München (DE)
(72) Erfinder: Leitner, Raimund, 9062 Mosburg (AT); Panis, Christian, 1230 Wien (AT)
(74) Vertreter: Jannig, Peter, Dipl.-Ing.

(57) **Zusammenfassung**

Es wird eine programmgesteuerte Einheit mit mehreren Befehlsausführungs-Einheiten zur gleichzeitigen Ausführung aufeinanderfolgender Befehle eines auszuführenden Programms beschrieben. Die beschriebene programmgesteuerte Einheit weist einige Besonderheiten auf, durch welche sich die Anzahl der Zugriffe auf einen das auszuführende Programm speichernden Programmspeicher reduzieren läßt.

## Beschreibung

Die vorliegende Erfindung betrifft eine Vorrichtung gemäß den Oberbegriffen der Patentansprüche 1, 22 und 28, d.h. eine programmgesteuerte Einheit mit mehreren Befehlsausführungs-Einheiten zur gleichzeitigen Ausführung aufeinanderfolgender Befehle eines auszuführenden Programms.

Eine solche programmgesteuerte Einheit ist beispielsweise ein superskalarer Prozessor. Superskalare Prozessoren sind seit vielen Jahren in den unterschiedlichsten Ausführungsformen bekannt und bedürfen hier keiner näheren Beschreibung.

Durch die gleichzeitige Ausführung mehrerer Befehle des auszuführenden Programms arbeiten superskalare Prozessoren bei gleicher Taktfrequenz schneller als normale (nach dem Von-Neumann-Prinzip arbeitende) Prozessoren.

Allerdings sind die Herstellung und der Betrieb eines superskalaren Prozessors auch wesentlich aufwendiger als es bei einem normalen Prozessor der Fall ist. Unter anderem müssen mehrere, beispielsweise fünf Befehlsausführungs-Einheiten (gegenüber von nur einer Befehlsausführungs-Einheit bei normalen Prozessoren) vorgesehen werden, wobei aber nur eher selten alle Befehlsausführungs-Einheiten gleichzeitig benötigt werden. Dies liegt daran, daß sich nur bestimmte Befehle eines Programms gleichzeitig ausführen lassen; beispielsweise können Befehle, die auf Ergebnisse von anderen Befehlen zurückgreifen, nicht zusammen mit diesen anderen Befehlen ausgeführt werden. So kann es im Extremfall vorkommen, daß von den vorhandenen Befehlsausführungs-Einheiten nur eine einzige benötigt wird, und alle anderen durch NOP-Befehle oder dergleichen in einen passiven Zustand versetzt werden. Diese anderen Befehlsausführungs-Einheiten stellen in Phasen, in welchen sie nicht benötigt werden, eine unnötige Belastung dar: sie sind in solchen Phasen nicht nur überflüssig, sondern tragen durch ihr Vorhandensein und ihren Betrieb zu einem Energieverbrauch und einer Erwärmung der programmgesteuerten Einheit und/oder des diese enthaltenden Systems bei, die höher sind, als es eigentlich erforderlich wäre. Dies hat zur Folge, daß bei superskalaren Prozessoren ein im Vergleich zu der in der Praxis gegenüber normalen Prozessoren erzielbaren Leistungssteigerung unverhältnismäßig großer Zusatzaufwand betrieben werden muß.

Der vorliegenden Erfindung liegt daher die Aufgabe zugrunde, die programmgesteuerte Einheit gemäß den Oberbegriffen der Patentansprüche 1, 22 und 28 derart weiterzubilden, daß sich der zum Einsatz solcher programmgesteuerter Einheiten zu treibende Aufwand reduzieren läßt.

Diese Aufgabe wird erfindungsgemäß durch die in den Patentansprüchen 1, 22 und 28 beanspruchten programmgesteuerten Einheiten gelöst.

Die erfindungsgemäßen programmgesteuerten Einheiten zeichnen sich dadurch aus,
- daß eine Zuordnungsvorrichtung vorgesehen ist, welche die auszuführenden Befehle unabhängig von deren jeweiliger Position innerhalb der die gleichzeitig auszuführenden Befehle umfassenden Befehlsfolgen beliebigen Befehlsausführungs-Einheiten zur Ausführung zuweisen kann,
- daß die auszuführenden Befehle aus einem Programmspeicher geholt und in einen in der programmgesteuerten Einheit vorgesehenen, mehrere unabhängig voneinander beschreibbare und auslesbare Speicherblöcke umfassenden Zwischenspeicher geschrieben werden, und/oder
- daß der programmgesteuerten Einheit durch einen Befehl befehlbar ist, einen Zwischenspeicher, in welchem die auszuführenden Befehle nach deren Auslesen aus einem Programmspeicher zwischengespeichert werden, oder einen bestimmten Teil dieses Zwischenspeichers für eine bestimmte Zeit oder bis zum Eintreten eines bestimmten Ereignisses nicht zu überschreiben.
Daß die programmgesteuerte Einheit eine wie beansprucht arbeitende Zuordnungsvorrichtung aufweist, ermöglicht es,
- daß im Programmspeicher, in welchem das von der programmgesteuerten Einheit auszuführende Programm gespeichert ist, nur die Befehle für diejenigen Befehlsausführungs-Einheiten gespeichert werden, die zur Ausführung des Programms tatsächlich benötigt werden, und
- daß bei der Festlegung der Befehle, die zusammen ausgeführt werden sollen, keine Rücksicht darauf genommen werden muß, daß ein Befehl, der ein Sprungziel eines Sprungbefehls sein kann, der erste Befehl einer die gleichzeitig auszuführenden Befehle umfassenden Befehlsfolge ist.
Dadurch kann der Programmspeicher kleiner gemacht werden oder ein umfangreicheres Programm aufnehmen, und müssen weniger Daten aus dem Programmspeicher ausgelesen werden. Dies hat den positiven Effekt, daß die programmgesteuerte Einheit ohne Einbußen der Leistungsfähigkeit derselben kleiner und einfacher aufgebaut sein kann, weniger Energie verbraucht, und weniger Wärme erzeugt.

Der Umstand, daß die auszuführenden Befehle in einen Zwischenspeicher geschrieben werden, der mehrere unabhängig voneinander beschreibbare und auslesbare Speicherblöcke umfaßt, ermöglicht es, daß die im Zwischenspeicher gespeicherten Befehle in einer nur einmal vorhandenen Befehlshol-Einheit der programmgesteuerten Einheit einer an mehreren Befehlen gleichzeitig erfolgenden Vorverarbeitung unterzogen werden können. Dies erweist sich beispielsweise, aber nicht ausschließlich als vorteilhaft, weil dadurch ohne zeitliche Verzögerung eine vorher nicht oder nur teilweise festgelegte Zuordnung der Befehle an die Befehlsausführungs-Einheiten, welche die Befehle ausführen sollen, erfolgen kann.

Daß der programmgesteuerten Einheit durch einen Befehl befehlbar ist, einen Zwischenspeicher, in welchem die auszuführenden Befehle nach deren Auslesen aus einem Programmspeicher zwischengespeichert werden, oder einen bestimmten Teil dieses Zwischenspeichers für eine bestimmte Zeit oder bis zum Eintreten eines bestimmten Ereignisses nicht zu überschreiben, ermöglicht es, daß die Anzahl der Zugriffe auf den Programmspeicher minimierbar ist.

Durch die genannten Maßnahmen läßt sich der Aufwand, der zur Herstellung und zum Betrieb von programmgesteuerten Einheiten, die aufeinanderfolgende Befehle eines auszuführenden Programms gleichzeitig ausführen können, getrieben werden muß, geringer halten als es bisher der Fall ist.

Vorteilhafte Weiterbildungen der Erfindung sind den Unteransprüchen, der nachfolgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1: den prinzipiellen Aufbau der nachfolgend beschriebenen programmgesteuerten Einheit,
- Figur 2: eine Darstellung der in der betrachteten programmgesteuerten Einheit zum Einsatz kommenden Befehlsabarbeitungs-Pipeline,
- Figur 3: eine schematische Darstellung der Zuordnung von durch die betrachtete programmgesteuerte Einheit auszuführenden Befehlen an die vorhandenen Befehlsausführungs-Einheiten,
- Figur 4A: die Befehle, die bei der betrachteten programmgesteuerten Einheit für die Ausführung eines Beispielprogramms im Programmspeicher gespeichert werden müssen,

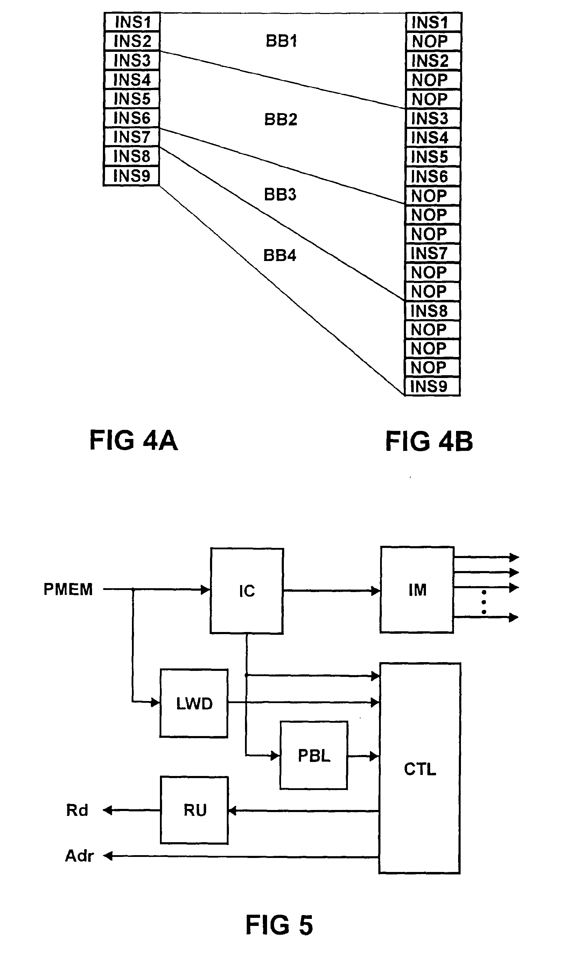

- Figur 4A: die Befehle, die bei einer herkömmlichen programmgesteuerten Einheit für die Ausführung des Beispielprogramms im Programmspeicher gespeichert werden müssen, und

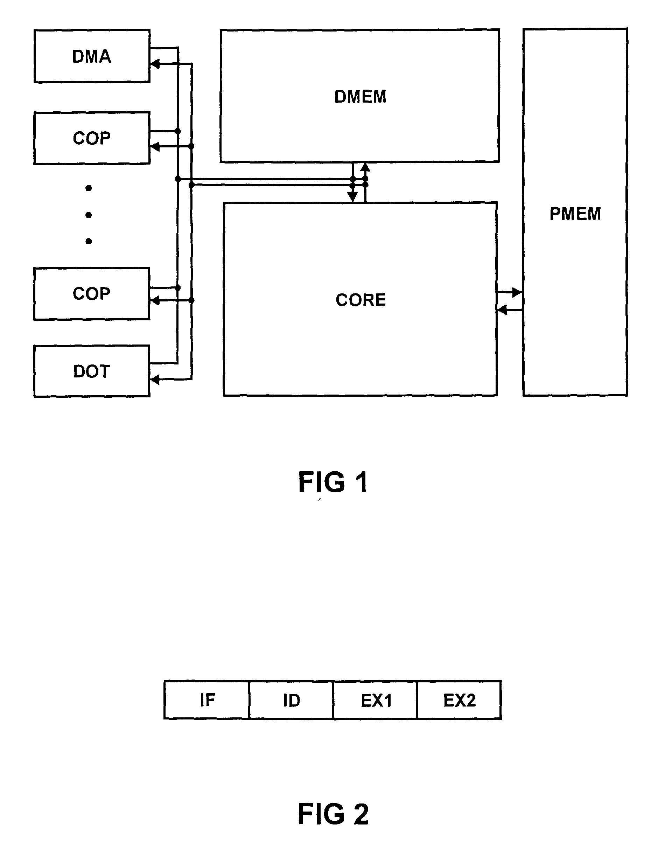

- Figur 5: einen möglichen Aufbau des Teils der programmgesteuerten Einheit, welcher die Zuordnungsvorrichtung enthält, durch welche die in Figur 2 beispielhaft veranschaulichte Zuordnung vorgenommen wird.

Bei der im folgenden beschriebenen programmgesteuerten Einheit handelt es sich um einen digitalen Signalprozessor mit superskalarer Architektur. Es sei jedoch bereits an dieser Stelle darauf hingewiesen, daß sich die nachfolgend beschriebenen Besonderheiten der programmgesteuerten Einheit auch bei anderen programmgesteuerten Einheiten wie etwa Mikroprozessoren oder Mikrocontroller mit superskalarer Architektur einsetzen lassen.

Der prinzipielle Aufbau der betrachteten programmgesteuerten Einheit ist in Figur 1 gezeigt. Die betrachtete programmgesteuerte Einheit umfaßt einen Core CORE, einen Programmspeicher PMEM, einen Datenspeicher DMEM, einen DMA-Controller DMA, mehrere Coprozessoren COP, und einen Konstanten-Speicher DOT, welche über in der Figur 1 nicht näher bezeichnete Busse miteinander verbunden sind.

Vorliegend interessiert insbesondere der Core CORE. Die restlichen Bestandteile der in der Figur 1 gezeigten programmgesteuerten Einheit sind von untergeordneter Bedeutung: sie können auch außerhalb der programmgesteuerten Einheit vorgesehen sein, oder - abgesehen vom Programmspeicher PMEM - entfallen; alternativ oder zusätzlich kann die programmgesteuerte Einheit auch andere Komponenten enthalten.

Der Core CORE holt die auszuführenden Befehle aus dem Programmspeicher PMEM und führt sie aus.

Das Holen und Ausführen der auszuführenden Befehle erfolgt vorliegend in einer vier Pipeline-Stufen umfassenden Pipeline. Die vier Pipeline-Stufen sind, wie in Figur 2 dargestellt ist, eine Befehlshol-Stufe (Instruction-Fetch-Stufe) IF, eine Befehlsdecodierungs-Stufe (Instruction-Decode-Stufe) ID, eine erste Befehlsausführungs-Stufe (erste Execution-Stufe) EX1, und eine zweite Befehlsausführungs-Stufe (zweite Execution-Stufe) EX2. Es sei bereits an dieser Stelle darauf hingewiesen, daß hierauf keine Einschränkung besteht; es können auch mehr oder weniger Pipeline-Stufen vorgesehen werden und/oder eine andere Verteilung der zur Befehlsabarbeitung durchzuführenden Schritte auf die Pipeline-Stufen vorgenommen werden.

Der Core CORE enthält
- eine die Instruction-Fetch-Stufe IF realisierende Befehlshol-Einheit,
- eine der Anzahl der gleichzeitig ausführbaren Befehle entsprechende Anzahl von die Befehlsdecodierungs-Stufe ID realisierenden Befehlsdecodierungs-Einheiten,
- eine der Anzahl der gleichzeitig ausführbaren Befehle entsprechende Anzahl von die erste Befehlsausführungs-Stufe EX1 realisierenden ersten Befehlsausführungs-Einheiten, und
- eine der Anzahl der gleichzeitig ausführbaren Befehle entsprechende Anzahl von die zweite Befehlsausführungs-Stufe EX2 realisierenden zweiten Befehlsausführungs-Einheiten.

Der Vollständigkeit halber sei noch angemerkt, daß der Core CORE ein Core mit einer Dual-Harvard-Load/Store-Architektur ist.

Solche Cores sind - abgesehen von den nachfolgend näher beschriebenen Besonderheiten - bekannt, so daß auf eine Beschreibung weiterer Einzelheiten verzichtet wird.

Die Besonderheiten der programmgesteuerten Einheit liegen im betrachteten Beispiel in der besonderen Ausbildung der Befehlshol-Stufe; bei einer anderen Pipeline-Struktur können davon allerdings auch andere Pipeline-Stufen realisierende Core-Bestandteile betroffen sein.

Die betrachtete programmgesteuerte Einheit, genauer gesagt die Befehlshol-Einheit derselben zeichnet sich dadurch aus,
- daß in ihr eine Zuordnungsvorrichtung vorgesehen ist, welche die auszuführenden Befehle unabhängig von deren jeweiliger Position innerhalb der die gleichzeitig auszuführenden Befehle umfassenden Befehlsfolgen beliebigen Befehlsausführungs-Einheiten zur Ausführung zuweisen kann,
- daß sie einen Instruction Cache aufweist,
- daß ihr durch einen Befehl befehlbar ist, einen Zwischenspeicher, in welchem die auszuführenden Befehle nach deren Auslesen aus einem Programmspeicher zwischengespeichert werden, oder einen bestimmten Teil dieses Zwischenspeichers für eine bestimmte Zeit oder bis zum Eintreten eines bestimmten Ereignisses nicht zu überschreiben.

Diese Besonderheiten können einzeln oder in beliebigen Kombinationen zum Einsatz kommen.

Im betrachteten Beispiel
- weist ein Befehl eine Länge von 20 Bits (Normal-Befehl) oder 40 Bits (Lang-Befehl) auf,
- wird der Programmspeicher PMEM in Einheiten von 80 Bits ausgelesen, und
- können bis zu fünf Befehle gleichzeitig ausgeführt werden, wobei die Befehle unabhängig voneinander Normal-Befehle oder Lang-Befehle sein können und bis zu zwei Load/Store-Befehle (beispielsweise Move-Befehle), bis zu zwei arithmethisch/logische Befehle (beispielsweise Add- oder And-Befehle), und einen Branch-Befehl (beispielsweise einen Jmp-Befehl) umfassen können.

Die die gleichzeitig ausführbaren Befehle umfassenden Befehlsfolgen werden im folgenden als Befehls-Bundles bezeichnet; die programmgesteuerte Einheit führt die auszuführenden Befehle in Einheiten von Befehls-Bundles aus. Welche Befehle jeweils zu einem Befehls-Bundle gehören, wird im betrachteten Beispiel bei der Programmierung und/oder bei der beispielsweise durch einen Compiler, einen Assembler und/oder einen Linker erfolgenden Umsetzung des für die programmgesteuerte Einheit geschriebenen Programmes in ein ausführbares Programm festgelegt.

Die im folgenden als Aligner bezeichnete Zuordnungsvorrichtung ermöglicht es, daß das von der programmgesteuerten Einheit auszuführende und im Programmspeicher PMEM gespeicherte Programm nur jeweils für diejenigen Befehlsausführungs-Einheiten Befehle enthält, die tatsächlich zur Programmausführung benötigt werden, und für Befehlsausführungs-Einheiten, die nicht benötigt werden, keine Befehle enthält.

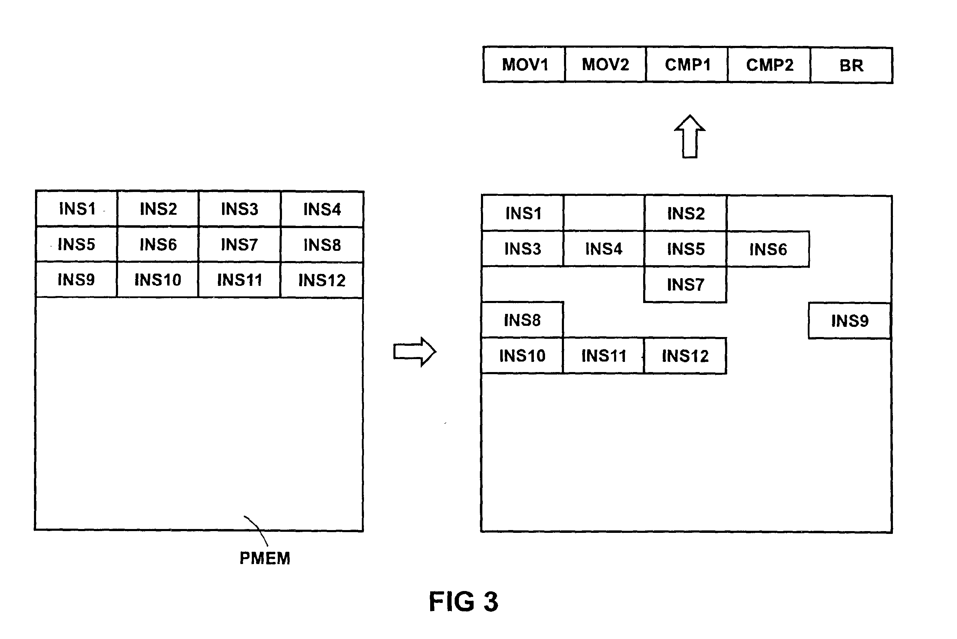

Dies ist anhand eines Beispiels in Figur 3 veranschaulicht. Die in der Figur 3 gezeigte Anordnung zeigt den Programmspeicher PMEM, und mit dem Bezugszeichen MOV1, MOV2, CMP1, CMP2 und BR bezeichnete fünf Befehlsausführungs-Einheiten.

Der Vollständigkeit halber sei angemerkt, daß die Befehlsausführungs-Einheiten MOV1 und MOV2 Befehlsausführungs-Einheiten zur Ausführung vom Load/Store-Befehlen sind, die Befehlsausführungs-Einheiten CMP1 und CMP2 Befehlsausführungs-Einheiten zur Ausführung vom arithmetisch/logischen Befehlen sind, und die Befehlsausführungs-Einheit BR eine Befehlsausführungs-Einheit zur Ausführung eines Branch-Befehls ist.

Im Programmspeicher PMEM sind Befehle INS1, INS2, ... INS12 gespeichert, wobei
- die Befehle INS1 und INS2,
- die Befehle INS3 bis INS6,
- der Befehl INS7,
- die Befehle INS8 und INS9, und
- die Befehle INS10 bis INS12 jeweils gleichzeitig auszuführen sind, und wobei
- die Befehle INS1, INS3, INS4, INS8, INS10 und INS11 Load/Store-Befehle sind,
- die Befehle INS2, INS5, INS6, INS7, und INS12 arithmetisch/ logische Befehle sind, und
- der Befehl INS9 ein Branch-Befehl ist.

Der Aligner kann dies erkennen und ordnet die einzelnen Befehle wie in der Figur 3 dargestellt zum richtigen Zeitpunkt der richtigen Befehlsausführungs-Einheit zu. Darauf, wie dies im einzelnen geschieht, wird später noch näher eingegangen.

Durch den Aligner entfällt die Notwendigkeit, Befehls-Bundles mit konstanter Länge zu verwenden. Die Befehls-Bundles müssen nur jeweils so viele Befehle enthalten wie es zur Ausführung des Programms unbedingt notwendig ist; die Aufnahme von NOP-Befehlen oder dergleichen für die jeweils nicht benötigten Befehlsausführungs-Einheiten in die Befehls-Bundles ist - anders als bisher üblich - nicht mehr erforderlich.

Ohne Aligner müssen die Befehls-Bundles jeweils eine der Anzahl der vorhandenen Befehlsausführungs-Einheiten entsprechende Anzahl von Befehlen umfassen, weil die Zuordnung der in den Befehls-Bundles enthaltenen Befehlen zu den Befehlsausführungs-Einheiten entsprechend der Position der betreffenden Befehle innerhalb der Befehls-Bundles erfolgt. D.h., der erste Befehl eines Befehls-Bundles wird stets durch eine bestimmte erste Befehlsausführungs-Einheit ausgeführt, der zweite Befehl eines jeweiligen Befehls-Bundles wird stets durch eine bestimmte zweite Befehlsausführungs-Einheit ausgeführt, der dritte Befehl eines Befehls-Bundles wird stets durch eine bestimmte dritte Befehlsausführungs-Einheit ausgeführt, usw.

Durch das Vorsehen eines Aligners verringert sich also die Anzahl der Befehle, die im Programmspeicher PMEM gespeichert und aus diesem geholt werden müssen. Dies ist beispielhaft in den Figuren 4A und 4B veranschaulicht, welche eine Gegenüberstellung der Befehle, die mit und ohne Vorsehen des Aligners im Programmspeicher PMEM gespeichert und aus diesem geholt werden müssen. Dabei wird das in Figur 3 veranschaulichte Beispiel zugrundegelegt.

Die Figur 4A veranschaulicht den Inhalt des Programmspeichers PMEM für den Fall, daß die vorstehend beschriebene, durch den Aligner durchgeführte flexible Zuordnung der Befehle zu den Befehlsausführungs-Einheiten erfolgt; die Figur 4B veranschaulicht den Inhalt des Programmspeichers PMEM für den Fall, daß eine von der Position der Befehle in den Befehls-Bundles abhängende feste Zuordnung der Befehle zu den Befehlsausführungs-Einheiten stattfindet. Dabei bezeichnen B1 bis B4 die jeweiligen Befehls-Bundles, und NOP die (NOP-) Befehle, die in dem in der Figur 4B veranschaulichten Fall zusätzlich im Programmspeicher PMEM gespeichert und aus diesem geholt werden müssen.

Wie aus den Figuren 4A und 4B ersichtlich ist, kann die Anzahl der im Programmspeicher PMEM zu speichernden und aus diesem zu holenden Befehle durch das Vorsehen eines Aligners im betrachteten Beispiel auf weniger als die Hälfte reduziert werden.

Dies hat den positiven Effekt,
- daß der Programmspeicher PMEM verkleinert werden kann und/oder umfangreichere Programme in diesem gespeichert werden können, und
- daß aus dem Programmspeicher PMEM weniger Daten ausgelesen werden müssen.

Ferner ermöglicht es das Vorsehen eines Aligners, daß das Sprungziel von im Programm enthaltenen Sprungbefehlen ein beliebiger Befehl innerhalb eines Befehls-Bundles sein kann; ohne Aligner dürfen Sprünge nur auf den jeweils ersten Befehl eines Befehls-Bundles erfolgen. Dieser Unterschied ermöglicht eine effizientere Ausnutzung der Befehlsausführungs-Einheiten: es ist nicht erforderlich, einen Befehl, der zusammen mit vorhergehenden Befehlen ausgeführt werden könnte, aufgrund der Tatsache, daß es sich um ein mögliches Sprungziel handelt, in das nächste Befehls-Bundle zu verlegen und damit erst später auszuführen als es theoretisch möglich wäre.

Figur 5 zeigt den prinzipiellen Aufbau des Teils der programmgesteuerten Einheit, durch den die auszuführenden Befehle aus dem Programmspeicher PMEM geholt und den Befehlsausführungs-Einheiten zugeordnet werden.

Die gezeigte Anordnung ist die Befehlshol-Einheit oder Teil derselben und enthält eine Lese-Einheit RU, einen Instruction-Cache IC, eine Instruction-Mapping-Einheit IM, eine Langbefehls-Erfassungseinrichtung LWD, eine p-Bit-Logik PBL, und eine Steuereinheit CTL.

Obgleich dies aus den nachfolgenden Erläuterungen noch deutlich hervorgehen wird, sei der Vollständigkeit halber bereits an dieser Stelle angemerkt, daß der an der betrachteten programmgesteuerte Einheit besonders interessierende Aligner, durch welchen die von der programmgesteuerten Einheit auszuführenden Befehle individuell den einzelnen Befehlsausführungs-Einheiten zugeordnet werden können, durch die Instruction-Mapping-Einheit IM, die Langbefehls-Erfassungseinrichtung LWD, die p-Bit-Logik PBL, und Teile der Steuereinheit CTL gebildet wird.

Die Steuereinheit CTL hat mehrere Aufgaben. Eine erste Aufgabe besteht darin, daß sie das Holen von Befehlen aus dem Programmspeicher PMEM steuert. Hierzu gibt sie an den Programmspeicher PMEM die Adresse Adr aus, von welcher Daten gelesen werden sollen, und steuert die (das Auslesen veranlassende) Lese-Einheit RU. Eine zweite Aufgabe der Steuereinheit CTL besteht darin, daß sie die Zuordnung der Befehle zu den Befehlsausführungs-Einheiten steuert. Hierzu erzeugt sie unter Auswertung von Informationen, die ihr von der Langbefehls-Erfassungseinrichtung LWD und der p-Bit-Logik PBL zugeführt werden, und weiteren Informationen, die sie selbst aus den Befehlen extrahiert, die Zuordnung festlegende Daten, und gibt diese an die die Zuordnung praktisch realisierende Instruction-Mapping-Einheit IM aus. Die Steuereinheit CTL kann bzw. muß auch noch weitere Aufgaben erfüllen; hierauf soll vorliegend jedoch nicht näher eingegangen werden.

Die Lese-Einheit RU gibt an den Programmspeicher PMEM ein Lesesignal Rd aus, wenn aus diesem Daten ausgelesen werden sollen, und veranlaßt, daß die daraufhin vom Programmspeicher PMEM ausgegebenen Daten in den Instruction-Cache IC übernommen werden. Die Lese-Einheit RU wird im betrachteten Beispiel durch einen Moore-Automaten oder - noch besser - durch einen Mealy-Automaten gebildet.

Der Instruction-Cache weist im betrachteten Beispiel eine Speicherkapazität von 16 20-Bit-Worten (16 Normal-Befehlen) auf und ist in mehrere (im betrachteten Beispiel in vier gleich große) Blöcke unterteilt, wobei jeder Block als zyklischer Puffer ausgebildet ist, und wobei die einzelnen Blöcke unabhängig voneinander und bei Bedarf auch gleichzeitig beschreibbar und auslesbar sind.

Die Langbefehls-Erfassungseinrichtung LWD überprüft, ob die aus dem Programmspeicher PMEM geholten Befehle Normal-Befehle oder Lang-Befehle sind, und gibt das Ergebnis an die Steuereinheit CTL aus. Ob ein Lang-Befehl vorliegt, läßt sich im betrachteten Beispiel an bestimmten Bits der die Befehle repräsentierenden Daten ersehen. Diese Überprüfung erfolgt zur Vermeidung von Verzögerungen vorzugsweise bereits während des Einschreibens der Befehle in den Instruction-Cache IC. Die aus dem Programmspeicher PMEM ausgegebenen Daten werden in diesem Fall nicht nur dem Instruction-Cache IC, sondern auch der Langbefehls-Erfassungseinrichtung LWD zugeführt. Die Ergebnisse der Überprüfung werden im betrachteten Beispiel in der Langbefehls-Erfassungseinrichtung LWD gespeichert, bis die Steuereinheit CTL die betreffenden Informationen benötigt.

Die P-Bit-Logik PBL untersucht die im Instruction-Cache gespeicherten Befehle, legt fest, welche Befehle zu einem Befehls-Bundle gehören (welche Befehle zusammen gleichzeitig auszuführen sind), und übermittelt das Ergebnis an die Steuereinheit CTL. Welche Befehle zu einem Befehls-Bundle gehören, läßt sich im betrachteten Beispiel an einem bestimmten, im folgenden als P-Bit bezeichneten Bit der die Befehle repräsentierenden Daten ersehen. Dieses P-Bit hat im betrachteten Beispiel beim letzten Befehl eines jeden Befehls-Bundles den Wert 0, und in allen anderen Fällen den Wert 1; wenn ein Befehls-Bundle nur einen einzigen Befehl enthält, weist das P-Bit dieses Befehls den Wert 0 auf. Selbstverständlich wäre es auch möglich, daß das P-Bit des letzten Befehls eines Befehls-Bundles den Wert 1 aufweist, und in allen anderen Fällen den Wert 0 aufweist. Es wäre auch denkbar, daß das P-Bit des jeweils ersten Befehls eines Befehls-Bundles einen besonderen Wert aufweist. Zur Vermeidung von Verzögerungen, die durch die Erfassung und Auswertung des P-Bits entstehen könnten, weist die P-Bit-Logik mehrere parallel arbeitende Teileinheiten auf; vorliegend ist jedem Block des Instruction Cache IC eine eigene P-Bit-Logik-Teileinheit zugeordnet.

Die Steuereinheit CTL führt auch selbst Überprüfungen an den auszuführenden Befehlen durch. Insbesondere stellt sie fest, um welchen Befehlstyp es sich bei den jeweiligen Befehlen handelt. Im betrachteten Beispiel überprüft sie, ob es sich um einen Load/Store-Befehl, einen arithmetisch/logischen Befehl, oder um einen Branch-Befehl handelt. Die Überprüfung erfolgt vorliegend anhand der Werte von zwei bestimmten Bits der die Befehle repräsentierenden Daten.

Unter Verwendung der der Steuereinheit CTL dann zur Verfügung stehenden Informationen, nämlich
- der von der P-Bit-Logik PBL erhaltenen Information, welche der im Instruction-Cache IC gespeicherten Befehls zusammen auszuführen sind (wo die zusammen auszuführenden Befehle innerhalb des Instruction-Cache IC stehen),
- der von der Langbefehls-Erfassungseinrichtung LWD erhaltenen Information, welche der zusammen auszuführenden Befehle Normal-Befehle, und welche der zusammen auszuführenden Befehle Lang-Befehle sind, und
- der selbst ermittelten Information, um welche Befehlstypen es sich bei den zusammen auszuführen Befehlen handelt,
kann die Steuereinheit CTL festlegen, welcher Instruction-Cache-Eintrag welcher Befehlsausführungs-Einheit zuzuordnen ist.

Das Ergebnis der Festlegung sind im betrachteten Beispiel Daten oder Signale zur Ansteuerung von in der Instruction-Mapping-Einheit IMU vorhandenen Multiplexer.

Die Instruction-Mapping-Einheit IMU stellt die Verbindungen zwischen den Instruction-Cache-Speicherplätzen, in welchen die zusammen auszuführenden Befehle gespeichert sind, und den Befehlsdecodierungs-Einheiten her, die den Befehlsausführungs-Einheiten, welche die betreffenden Befehle auszuführen haben, zugeordnet (vorgeschaltet) sind. Dies geschieht im betrachteten Beispiel durch Multiplexer. Vorliegend enthält die Instruction-Mapping-Einheit IMU eine Anzahl von Multiplexern, die doppelt so groß ist wie die Anzahl der vorhandenen Befehlsausführungs-Einheiten. Jeder Multiplexer weist mindestens eine der Anzahl der Instruction-Cache-Speicherplätze entsprechende Anzahl von Eingangsanschlüssen, und einen Ausgangsanschluß auf. Dabei
- sind die Eingangsanschlüsse jedes Multiplexers mit allen Instruction-Cache-Speicherplätzen verbunden, und
- sind die Ausgangsanschlüsse der Multiplexer mit jeweils einer Befehlsdecodierungs-Einheit verbunden, wobei jeder Befehlsdecodierungs-Einheit zwei Multiplexer zugeordnet sind,
so daß über die Multiplexer jeder Instruction-Cache-Eintrag einer beliebigen Befehlsdecodierungs-Einheit zugeführt werden kann.

Daß jeder Befehlsausführungs-Einheit zwei Multiplexer zugeordnet sind, liegt daran, daß jede der Befehlsausführungs-Einheiten wahlweise Normal-Befehle oder Lang-Befehle ausführen kann, und daß Normal-Befehle einen Speicherplatz im Instruction-Cache IC belegen, und Lang-Befehle zwei Speicherplätze im Instruction-Cache IC belegen.

Die Befehlsausführungs-Einheiten, für die in einem Befehls-Bundle kein Befehl vorhanden ist, werden für die Dauer der Ausführung dieses Befehls-Bundles deaktiviert oder bekommen Befehle (beispielsweise NOP-Befehle) zugeführt, die bzw. deren Ausführung die ordnungsgemäße Ausführung des auszuführenden Programms nicht beeinträchtigen oder nicht beeinträchtigen können. Letzteres kann beispielsweise dadurch geschehen, daß die Multiplexer der Instruction-Mapping-Einheit einen zusätzlichen Eingangsanschluß aufweisen, welcher mit einer einen solchen Befehl speichernden Speichereinrichtung verbunden ist, und daß die Multiplexer so angesteuert werden, daß sie die diesem Eingangsanschluß zugeführten Daten durchschalten, wenn ein Befehls-Bundle ausgeführt wird, das für Befehlsausführungs-Einheiten, welchen die betreffenden Multiplexer zugeordnet sind, keine Befehle enthält.

Wie vorstehend bereits erwähnt wurde, ist der programmgesteuerten Einheit durch einen Befehl befehlbar, einen Zwischenspeicher, in welchem die auszuführenden Befehle nach deren Auslesen aus einem Programmspeicher zwischengespeichert werden, oder einen bestimmten Teil dieses Zwischenspeichers für eine bestimmte Zeit oder bis zum Eintreten eines bestimmten Ereignisses nicht zu überschreiben. Dadurch kann erzwungen werden, daß kurze Schleifen ohne ein wiederholtes Lesen der Befehle aus dem Programmspeicher aus dem Instruction Cache heraus ausgeführt werden. Dies hat den positiven Effekt, daß die Anzahl der Lesezugriffe auf dem Programmspeicher minimiert wird. Der genannte Befehl wird vorzugsweise bereits in der Befehlshol-Einheit (beispielsweise in der Steuereinheit CTL) decodiert und ausgeführt; es könnte vorgesehen werden, diesen Befehl als besonderen Befehlstyp zu führe, wodurch es schnell und einfach zu erkennen wäre, daß es sich um einen besonderen Befehl handelt.

Durch die vorstehend beschriebenen Besonderheiten der betrachteten programmgesteuerten Einheit läßt sich - unabhängig von den Einzelheiten der praktischen Realisierung derselben - der Aufwand, der zur Herstellung und zum Betrieb von programmgesteuerten Einheiten, die aufeinanderfolgende Befehle eines auszuführenden Programms gleichzeitig ausführen können, getrieben werden muß, geringer halten als es bisher der Fall ist.

### Bezugszeichenliste

- Adr: Adresse für PMEM
- BR: Befehlsausführungs-Einheit für Branch-Befehle
- CMP1: Befehlsausführungs-Einheit für arithmetisch/logische Befehle
- CMP2: Befehlsausführungs-Einheit für arithmetisch/logische Befehle
- COP: Coprozessor
- CORE: Core
- CTL: Steuereinheit
- DMA: DMA-Controller
- DMEM: Datenspeicher
- DOT: Konstanten-Speicher
- EX1: erste Befehlsausführungs-Stufe
- EX2: zweite Befehlsausführungs-Stufe
- IC: Instruction Cache
- ID: Befehlsdecodierungs-Stufe
- IF: Befehlshol-Stufe
- IM: Instruction-Mapping-Einheit
- INSx: Befehle
- MOV1: Befehlsausführungs-Einheit für Load/Store-Befehle
- MOV2: Befehlsausführungs-Einheit für Load/Store-Befehle
- NOP: NOP-Befehl
- PBL: P-Bit-Logik
- PMEM: Programmspeicher
- Rd: Lesesignal für PMEM
- RU: Lese-Einheit

## Patentansprüche

1. Programmgesteuerte Einheit mit mehreren Befehlsausführungs-Einheiten zur gleichzeitigen Ausführung aufeinanderfolgender Befehle eines auszuführenden Programms,
**dadurch gekennzeichnet,**
**daß** eine Zuordnungsvorrichtung vorgesehen ist, welche die auszuführenden Befehle unabhängig von deren jeweiliger Position innerhalb der die gleichzeitig auszuführenden Befehle umfassenden Befehlsfolgen beliebigen Befehlsausführungs-Einheiten zur Ausführung zuweisen kann.

2. Programmgesteuerte Einheit nach Anspruch 1,
**dadurch gekennzeichnet,**
**daß** die programmgesteuerte Einheit eine eine Befehlshol-Stufe, eine Befehlsdecodierungs-Stufe, und eine oder mehrere Befehlsausführungs-Stufen umfassende Pipeline-Struktur aufweist.

3. Programmgesteuerte Einheit nach Anspruch 2,
**dadurch gekennzeichnet,**
**daß** die Zuordnungsvorrichtung Bestandteil einer die Befehlshol-Stufe bildenden Befehlshol-Einheit ist.

4. Programmgesteuerte Einheit nach einem der vorhergehenden Ansprüche,
**dadurch gekennzeichnet,**
**daß** vor der Zuordnung der gleichzeitig auszuführenden Befehle an die die betreffenden Befehle ausführenden Befehlsausführungs-Einheiten ermittelt wird, welche Befehle gleichzeitig auszuführen sind.

5. Programmgesteuerte Einheit nach Anspruch 4,
**dadurch gekennzeichnet,**
**daß** die Ermittlung, welche Befehle gleichzeitig auszuführen sind, unter Auswertung einer entsprechenden Information in den die Befehle repräsentierenden Daten erfolgt.

6. Programmgesteuerte Einheit nach einem der vorhergehenden Ansprüche,
**dadurch gekennzeichnet,**
**daß** vor der Zuordnung der gleichzeitig auszuführenden Befehle an die die betreffenden Befehle ausführenden Befehlsausführungs-Einheiten ermittelt wird, wie lange die auszuführenden Befehle sind.

7. Programmgesteuerte Einheit nach Anspruch 6,
**dadurch gekennzeichnet,**
**daß** die Ermittlung, wie lange die auszuführenden Befehle sind, unter Auswertung einer entsprechenden Information in den die Befehle repräsentierenden Daten erfolgt.

8. Programmgesteuerte Einheit nach einem der vorhergehenden Ansprüche,
**dadurch gekennzeichnet,**
**daß** vor der Zuordnung der gleichzeitig auszuführenden Befehle an die die betreffenden Befehle ausführenden Befehlsausführungs-Einheiten ermittelt wird, zu welchem Befehlstyp die auszuführenden Befehle gehören.

9. Programmgesteuerte Einheit nach Anspruch 8,
**dadurch gekennzeichnet,**
**daß** die Ermittlung, zu welchem Befehlstyp die auszuführenden Befehle gehören, unter Auswertung einer entsprechenden Information in den die Befehle repräsentierenden Daten erfolgt.

10. Programmgesteuerte Einheit nach einem der vorhergehenden Ansprüche,
**dadurch gekennzeichnet,**
**daß** die auszuführenden Befehle aus einem Programmspeicher geholt und in einen in der programmgesteuerten Einheit vorgesehenen Zwischenspeicher geschrieben werden.

11. Programmgesteuerte Einheit nach Anspruch 10,
**dadurch gekennzeichnet,**
**daß** der Zwischenspeicher ein Instruction-Cache ist.

12. Programmgesteuerte Einheit nach Anspruch 10 oder 11,
**dadurch gekennzeichnet,**
**daß** der Zwischenspeicher mehrere unabhängig voneinander beschreibbare und auslesbare Speicherblöcke umfaßt,

13. Programmgesteuerte Einheit nach Anspruch 12,
**dadurch gekennzeichnet,**
**daß** jeder der Speicherblöcke als ein zyklischer Puffer ausgebildet ist.

14. Programmgesteuerte Einheit nach Anspruch 12 oder 13,
**dadurch gekennzeichnet,**
**daß** jeder der Speicherblöcke eine Speicherkapazität aufweist, die der in einem Lesevorgang aus dem Programmspeicher ausgelesenen Datenmenge entspricht.

15. Programmgesteuerte Einheit nach einem der Ansprüche 10 bis 14,
**dadurch gekennzeichnet,**
**daß** der programmgesteuerten Einheit durch einen Befehl befehlbar ist, den Zwischenspeicher oder einen bestimmten Teil desselben für eine bestimmte Zeit oder bis zum Eintreten eines bestimmten Ereignisses nicht zu überschreiben.

16. Programmgesteuerte Einheit nach Anspruch 15,
**dadurch gekennzeichnet,**
**daß** die Ausführung des Befehls, durch welchen der programmgesteuerten Einheit befehlbar ist, den Zwischenspeicher oder einen bestimmten Teil desselben für eine bestimmte Zeit oder bis zum Eintreten eines bestimmten Ereignisses nicht zu überschreiben, in der Befehlshol-Einheit der programmgesteuerten Einheit ausgeführt wird.

17. Programmgesteuerte Einheit nach einem der Ansprüche 10 bis 16,
**dadurch gekennzeichnet,**
**daß** die Zuordnungsvorrichtung nach der Festlegung, welcher der gleichzeitig auszuführenden Befehle welcher Befehlsausführungs-Einheit zur Ausführung zuzuweisen ist, eine Verbindung zwischen den die gleichzeitig auszuführenden Befehle speichernden Zwischenspeicher-Elementen und den Befehlsdecodierungs-Einheiten herstellen, die den Befehlsausführungs-Einheiten, welche die betreffenden Befehle auszuführen haben, zugeordnet sind.

18. Programmgesteuerte Einheit nach Anspruch 17,
**dadurch gekennzeichnet,**
**daß** die Verbindungen unter Verwendung von Multiplexern erfolgen.

19. Programmgesteuerte Einheit nach Anspruch 18,
**dadurch gekennzeichnet,**
**daß** über die Multiplexer jedes Zwischenspeicher-Element mit einer beliebigen Befehlsdecodierungs-Einheit verbindbar ist

20. Programmgesteuerte Einheit nach Anspruch 18 oder 19,
**dadurch gekennzeichnet,**
**daß** jeder Befehlsausführungs-Einheit mindestens ein Multiplexer zugeordnet ist, und daß die Ausgangsanschlüsse der Multiplexer, die einer Befehlsausführungs-Einheit zugeordnet sind, mit den Eingangsanschlüssen der der betreffenden Befehlsausführungs-Einheit zugeordneten Befehlsdecodierungs-Einheit verbunden sind.

21. Programmgesteuerte Einheit nach einem der Ansprüche 18 bis 20,
**dadurch gekennzeichnet,**
**daß** jeder der Multiplexer mindestens eine der Anzahl der Zwischenspeicher-Elemente entsprechende Anzahl von Eingangsanschlüssen aufweist, und daß die Eingangsanschlüsse jedes Multiplexers mit allen Zwischenspeicher-Elementen verbunden sind.

22. Programmgesteuerte Einheit mit mehreren Befehlsausführungs-Einheiten zur gleichzeitigen Ausführung aufeinanderfolgender Befehle eines auszuführenden Programmes,
**dadurch gekennzeichnet,**
**daß** die auszuführenden Befehle aus einem Programmspeicher geholt und in einen in der programmgesteuerten Einheit vorgesehenen, mehrere unabhängig voneinander beschreibbare und auslesbare Speicherblöcke umfassenden Zwischenspeicher geschrieben werden.

23. Programmgesteuerte Einheit nach Anspruch 22,
**dadurch gekennzeichnet,**
**daß** der Zwischenspeicher ein Instruction-Cache ist.

24. Programmgesteuerte Einheit nach Anspruch 22 oder 23,
**dadurch gekennzeichnet,**
**daß** jeder der Speicherblöcke als ein zyklischer Puffer ausgebildet ist.

25. Programmgesteuerte Einheit nach einem der Ansprüche 22 bis 24,
**dadurch gekennzeichnet,**
**daß** jeder der Speicherblöcke eine Speicherkapazität aufweist, die der in einem Lesevorgang aus dem Programmspeicher ausgelesenen Datenmenge entspricht.

26. Programmgesteuerte Einheit nach einem der Ansprüche 22 bis 25,
**dadurch gekennzeichnet,**
**daß** der programmgesteuerten Einheit durch einen Befehl befehlbar ist, den Zwischenspeicher oder einen bestimmten Teil desselben für eine bestimmte Zeit oder bis zum Eintreten eines bestimmten Ereignisses nicht zu überschreiben.

27. Programmgesteuerte Einheit nach Anspruch 26,
**dadurch gekennzeichnet,**
**daß** die Ausführung des Befehls, durch welchen der programmgesteuerten Einheit befehlbar ist, den Zwischenspeicher oder einen bestimmten Teil desselben für eine bestimmte Zeit oder bis zum Eintreten eines bestimmten Ereignisses nicht zu überschreiben, in der Befehlshol-Einheit der programmgesteuerten Einheit ausgeführt wird.

28. Programmgesteuerte Einheit mit mehreren Befehlsausführungs-Einheiten zur gleichzeitigen Ausführung aufeinanderfolgender Befehle eines auszuführenden Programms,
**dadurch gekennzeichnet,**
**daß** der programmgesteuerten Einheit durch einen Befehl befehlbar ist, einen Zwischenspeicher, in welchem die auszuführenden Befehle nach deren Auslesen aus einem Programmspeicher zwischengespeichert werden, oder einen bestimmten Teil dieses Zwischenspeichers für eine bestimmte Zeit oder bis zum Eintreten eines bestimmten Ereignisses nicht zu überschreiben.

29. Programmgesteuerte Einheit nach Anspruch 28,
**dadurch gekennzeichnet,**
**daß** die Ausführung des Befehls, durch welchen der programmgesteuerten Einheit befehlbar ist, den Zwischenspeicher oder einen bestimmten Teil desselben für eine bestimmte Zeit oder bis zum Eintreten eines bestimmten Ereignisses nicht zu überschreiben, in der Befehlshol-Einheit der programmgesteuerten Einheit ausgeführt wird.
